# EUROPÄISCHE PATENTSCHRIFT

(11) **EP 0 880 441 B1**
(45) Veröffentlichungstag und Bekanntmachung des Hinweises auf die Patenterteilung: **09.05.2001**
(21) Anmeldenummer: 97905059.8
(22) Anmeldetag: 20.02.1997
(51) Int. Cl.: B60G 17/027, B60G 17/015

(54) **TELESKOPARTIGER SCHWINGUNGSDÄMPFER ZWISCHEN DEM AUFBAU UND DEM FÜHRUNGSELEMENT EINES RADES EINES KRAFTFAHRZEUGES**
TELESCOPIC VIBRATION DAMPER BETWEEN THE BODYWORK AND THE GUIDE MEMBER OF A MOTOR VEHICLE WHEEL
AMORTISSEUR DE VIBRATIONS TELESCOPIQUE ENTRE LA CARROSSERIE ET L'ELEMENT DE GUIDAGE D'UNE ROUE D'UN VEHICULE AUTOMOBILE

(30) Priorität: 24.02.1996 DE 19606990
(43) Veröffentlichungstag der Anmeldung: 02.12.1998
(73) Patentinhaber: DaimlerChrysler AG, 70567 Stuttgart (DE)
(72) Erfinder: LUNCZ, Helmut, D-70825 Korntal-Münchingen (DE); WIRTZ, Joachim, D-70372 Stuttgart (DE); FRITZ, Peter, D-70186 Stuttgart (DE); FORSBACH, Michael, D-71384 Weinstadt (DE)
(74) Vertreter: Patentanwalts-Partnerschaft Rotermund + Pfusch
(86) Internationale Anmeldenummer: EP9700796
(87) Internationale Veröffentlichungsnummer: WO9730862

(56) Entgegenhaltungen:
- EP-A- 0 486 848
- DE-A- 2 911 768
- DE-A- 3 502 579
- DE-A- 4 231 641
- DE-U- 1 876 372
- GB-A- 2 164 417
- GB-A- 2 288 577

## Beschreibung

Die Erfindung betrifft eine Feder-Dämpfer-Einrichtung zwischen einem Rad und dem Aufbau eines Kraftfahrzeuges nach dem Oberbegriff des Patentanspruchs 1.

Eine solche Einrichtung ist aus GB 2 288 577 A bekannt. Bei jener Einrichtung sind der Stoßdämpfer und die Feder parallel zueinander verlaufend nebeneinander angeordnet. Die Art der Meßeinrichtungen ist nicht beschrieben.

Aus DE 35 02 579 A ist eine achsgleich aufgebaute Feder-Dämpfer-Einrichtung mit einer Vorrichtung zum Verstellen des Abstandes der Widerlager der Feder bekannt. Abstandsmeßeinrichtungen sind dort nicht vorgesehen.

In DE 42 44 204 A ist ein Stoßdämpfer beschrieben, bei dem von einem Verdrängerkörper Hydraulikflüssigkeit aus einem Dämpfungszylinder über eine Drossel gegen ein Luftpolster verdrängbar ist. Die Ausgangslage des Verdrängungskörpers in dem Dämpfungszylinder und damit der Abstand zwischen den Anlenkungen an dem Aufbau und der Führung eines Rades kann durch eine getrennt mögliche Variation des Hydraulikflüssigkeitsstromes innerhalb des Dämpfungszylinders verändert werden.

Die Erfindung beschäftigt sich mit dem Problem, eine FederDämpfungs-Einrichtung zu schaffen, die bei einem konstruktiv einfachen Aufbau senkrecht zur Einfederungsrichtung kleinbauend ist und mit ebenfalls einfach aufgebauten und platzsparend unterbringbaren Abstandsmeßeinrichtungen arbeiten kann.

Eine Lösung dieses Problems zeigt eine Ausbildung einer gattungsgemäßen Feder-Dämpfer-Einrichtung mit den kennzeichnenden Merkmalen des Patentanspruchs 1 auf.

Bei dieser Lösung sind die Sensoren der Abstandsmeßeinrichtung in einem gemeinsamen rohrförmigen Halter hintereinanderliegend konstruktiv einfach und sicher montierbar angeordnet. Dieser rohrförmige Halter kann parallel zur Kolbenstange des Schwingungsdämpfers angeordnet sein oder auch in die Kolbenstange integriert werden, indem die Kolbenstange selbst den Halter bildet.

Die Kolbenstange ist erfindungsgemäß in ein Hydraulikaggregat zur Veränderung des Abstandes zwischen dem Aufbau- und dem Führungselement eines Rades eines Kraftfahrzeuges integriert. Durch dieses Hydraulikaggregat wird die Einbaulänge des Schwingungsdämpfers verändert, indem die Kolbenstange mehr oder weniger tief in den Dämpfungszylinder eintaucht und gegenüber dieser verstellbaren Lage im Fahrbetrieb schwingt. Durch eine gemeinsame Auswertung der erfindungsgemäß eingerichteten Wegmeßsysteme kann der jeweilige Abstand zwischen den Anlenkpunkten des Schwingungsdämpfers an dem Fahrzeugaufbau einerseits und dem Führungselement eines zugeordneten Rades andererseits mit konstruktiv und funktionell einfachen Mitteln eindeutig ermittelt werden und zwar auch bei schwingender Kolbenstange über den gesamten Schwingungsverlauf.

Ausführungsbeispiele der Erfindung sind in der Zeichnung dargestellt.

Es zeigen
- Fig. 1: einen Längsschnitt durch eine ein Federbein eines Kraftfahrzeuges darstellende Feder-Stoßdämpfer-Einrichtung mit radial innen angeordneten Sensoren eines Wegmeßsystems,
- Fig. 2: eine Feder-Stoßdämpfer-Einrichtung in einer Darstellung nach Fig. 1 mit radial außen angeordneten Sensoren eines Wegmeßsystems.

Das Federbein ist mit einem aufbauseitigen Gelenk 1 an einem nicht dargestellten Fahrzeugaufbau und mit einem radseitigen Gelenk 2 an einem ebenfalls nicht dargestellten Radführungselement, beispielsweise einer Achse, kardanisch schwenkbar angeordnet.

Von dem Federbein grenzt an das radseitige Gelenk 2 der Dämpfungszylinder 3 des Stoßdämpfers an, während die Kolbenstange 4 dieses Stoßdämpfers mit dem aufbauseitigen Gelenk 1 verbunden ist. Die Kolbenstange 4 ragt über einen größeren Bereich aus dem Dämpfungszylinder 3 heraus. In diesem Bereich greift eine hydraulische Verstelleinrichtung 5 an der Kolbenstange 4 an. Diese hydraulische Verstelleinrichtung dient dazu, die Fahrlage des Fahrzeuges zu verändern bzw. den jeweiligen aktuellen Betriebsbedingungen anzupassen. Mit einer solchen Verstelleinrichtung sollen insbesondere Nick- bzw. Wankbewegungen oder Schräglagen des Fahrzeugaufbaus selbsttätig ausgeglichen werden können. Wie dies mit einer derartigen Einrichtung konkret geschehen kann, ist unter anderem in DE 42 31 641 A1 ausführlich beschrieben, so daß auf die betreffende Funktionsweise hier nicht näher eingegangen werden muß.

Die Verstelleinrichtung 5 besitzt als ein bewegliches Element zur Veränderung des Volumens eines Hydraulik-Arbeitsraumens 6 ein zylindrisches Gehäuse 7. Dieses Gehäuse 7 ist an seinen axialen Enden gegenüber der Kolbenstange 4 über Ringdichtungen 8 zum dichten Abschluß des Hydraulik-Arbeitsraumes 6 gedichtet. Die untere dieser beiden Dichtungen 8 greift in einem Bereich der Kolbenstange 4 an, in dem diese einen bis zu einem Verdrängerkolben 9 innerhalb des Dämpfungszylinders 3 ersten Durchmesser aufweist. Die obere Dichtung 8 umgreift die Kolbenstange 4 dagegen in einem Bereich mit einem größeren zweiten Durchmesser. Der größere zweite Durchmesser wird durch eine rohrförmige Umhüllung 10 der Kolbenstange 4 erreicht. Ein Ringspalt 11 zwischen der rohrförmigen Umhüllung 10 und der radial darin liegenden Kolbenstange 4 dient als Hydraulikflüssigkeits-Versorgungsleitung zu bzw. von dem Hydraulik-Arbeitsraum 6. Mit einem gesteuerten nicht dargestellten Hydraulik-Flüssigkeitsspeicher steht der Ringspalt 11 über eine Leitung 12 in Verbindung.

Durch ein Verschieben aufgrund einer Veränderung des Volumens des Hydraulik-Arbeitsraumes 6 wird der Abstand zwischen den beiden Gelenken 1 und 2 verändert. Bei einem konstant gehaltenen Volumen des Hydraulik-Arbeitsraumes 6 ist das zylindrische Gehäuse 7 der hydraulischen Verstelleinrichtung 5 funktionell fest mit der Kolbenstange 4 verbunden. In diesem Fall ruht der Fahrzeugaufbau durch Verbindung mit dem Gelenk 1 über eine Feder 13 auf dem Dämpfungszylinder 3 des Stoßdämpfers. Dabei stellt ein an dem zylindrischen Gehäuse 7 vorhandener Ringbund 14 das aufbauseitige Widerlager der Feder 13 dar, während das radseitige Widerlager ein mit dem oberen Ende des Dämpfungszylinders 3 fest verbundener glokkenförmiger Ringbund 15 ist. Erfolgt bei nicht aktiver Verstelleinrichtung 5, das heißt bei relativ zu der Kolbenstange 4 ruhendem zylindrischem Gehäuse 7, ein Ein- oder Ausfedern der Feder 13, bewegt sich bei einer praktisch ruhenden Kolbenstange 4 lediglich der Dämpfungszylinder 3 zur Schwingungsdämpfung.

Das zylindrische Gehäuse 7 der hydraulischen Verstelleinrichtung 5 kann durch Volumenveränderung des Hydraulik-Arbeitsraumes 6 zwischen Anschlägen 16 und 17 der Kolbenstange 4 verschoben werden. In diesem Bereich kann damit die Höhe des Fahrzeugaufbaues, das heißt der Abstand zwischen den beiden Gelenken 1 und 2, verändert werden. Zur Begrenzung der Schwingungsamplitude des Stoßdämpfers ist an der Kolbenstange 4 an der Rückseite des Anschlags 17 ein weiterer gepolsterter Anschlag 25 vorgesehen, der bei ausgeschöpfter vorgegebener Amplitude an dem Dämpfungszylinder 3 anschlägt. Zur Verhinderung der Blockmaß-Unterschreitung der Feder 13 dient der Anschlag 18, durch den ein Ausschlagen der Kolbenstange 4 in Richtung des Dämpfungszylinders 3 begrenzt ist.

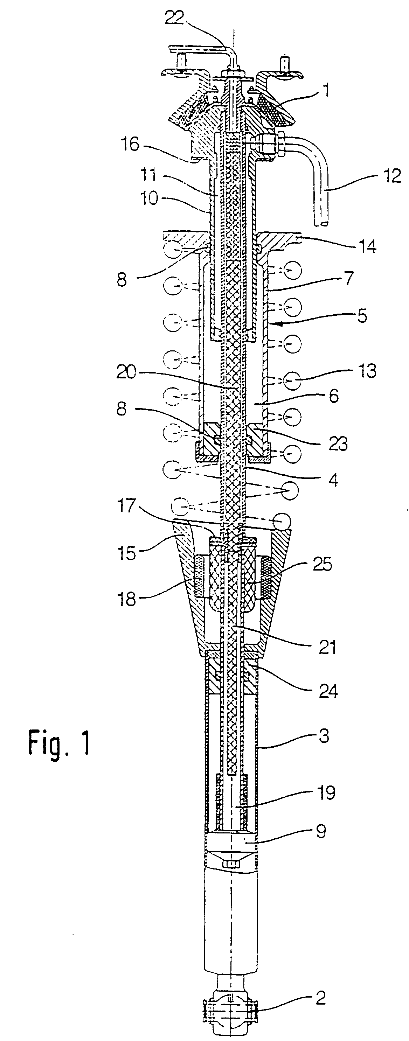

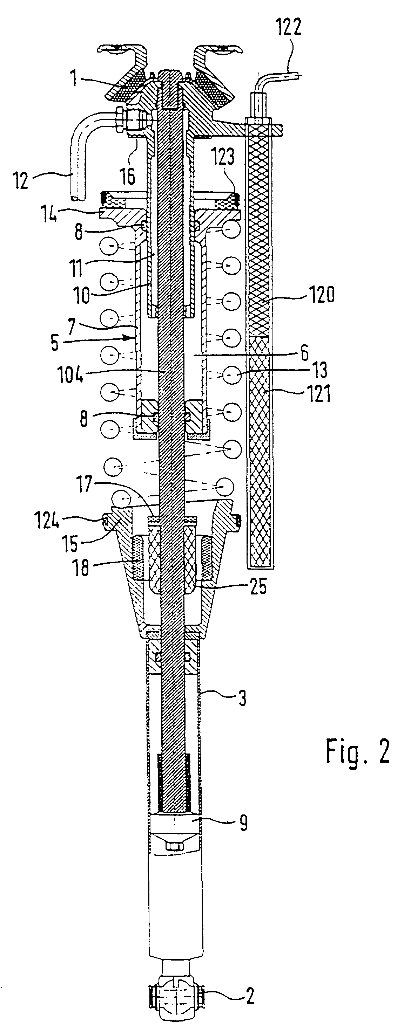

Der vorstehend beschriebene Aufbau ist bei den in Fig. 1 und 2 dargestellten beiden Ausführungsvarianten in gleicher Weise gegeben. Unterschiede bestehen lediglich bei der Ausgestaltung des Wegmeßsystems.

Bei der Ausführung nach Fig. 1 besitzt die Kolbenstange 4 über ihre gesamte Länge einen Hohlraum 19.

Dieser Hohlraum 19 ist mit zwei Sensoren 21 (erster Sensor) und 20 (zweiter Sensor) bestückt. Diese Sensoren 20 und 21 sind als Meßspulen mit einem Aufbau nach DE 42 25 968 A1 aufgebaut, die über eine zentral aus der Kolbenstange 4 herausgeführte Zuleitung 22 elektrisch versorgbar sind. Den Sensoren 20 und 21 sind jeweils Positionsgeber 23 bzw. 24 in dem zylindrischen Gehäuse 7 bzw. an dem offenen Ende des Dämpfungszylinders 3 zugeordnet. Diese Positionsgeber 23 und 24 sind Aluminiumringe, die zusätzlich die Funktion eines axialen Verschlusses der Arbeitsräume der hydraulischen Verstelleinrichtung 5 einerseits und des Dämpfungszylinders 3 andererseits erfüllen. Die Positionsgeber 23 und 24 besitzen hier die Funktion eines den als Meßspulen ausgebildeten Sensoren 20, 21 jeweils zugeordneten Meßobjektes im Sinne der Wegmeßsystem-Einrichtung nach DE 42 25 968 A1. Um das Wegmeßsystem nach der vorgenannten Schrift einsetzen zu können, besteht die Kolbenstange 4 aus nicht magnetisierbarem Material wie beispielsweise Keramik, Aluminium, austenitischem Edelstahl oder dergleichen. Die Positionsgeber 23 und 24 bestehen aus Aluminium.

Bei einer vorbestimmten und unverändert bleibenden Einstellung der Hydraulikeinrichtung 5 mit Bezug auf die wirksame Einbaulänge des Schwingungsdämpfers ist der Abstand des Fahrzeugaufbaus von einem zugeordneten Führungselement eines Rades durch den Positionsgeber 24 ermittelbar.

Durch den Positionsgeber 23 ist dagegen die axiale Zuordnung der Kolbenstange 4 gegenüber dem zylindrischen Gehäuse 7 der Hydraulik-Verstelleinrichtung 5 meßbar.

Durch eine Auswertung der Lagen der Positionsgeber 23 und 24 sind auch bei aktiver Verstelleinrichtung 5 während des Fahrbetriebes augenblickliche Ist-Abstände zwischen Fahrzeugaufbau und Fahrbahn sowie Stellung des Gehäuses 17 meßbar bzw. Abstandsänderungen sind kontinuierlich größenmäßig ermittelbar.

Die Anordnung eignet sich in gleicher Weise auch für die Anwendung magnetostriktiver Sensoren. Statt der beiden Meßspulen bestehen die Sensoren 20, 21 aus Wellenleitern und als Positionsgeber 23, 24 dienen Magnete.

Ein besonderer Vorteil der erfindungsgemäßen Ausführung besteht darin, die notwendigen Sensor-Anschlußkabel ohne Kontakt zur Hydraulikflüssigkeit innerhalb der Einrichtung aus dem Federbein nach außen führen zu können. Außerdem wird die in der Kolbenstange 4 untergebrachte Sensorik des Meßsystemes durch die Kolbenstange selbst als Gehäuse für die Sensorik vor Umwelteinflüssen geschützt. Des weiteren ist der Montageaufwand im Vergleich mit extern oder in Hydraulikflüssigkeit angebrachten Sensoren erheblich verringert.

Bei der Ausführung nach Fig. 2 sind die Sensoren 20 und 21 des Wegmeßsystems nach der Ausführung in Fig. 1 ersetzt durch radial außerhalb der Kolbenstange 104 angebrachte, jedoch mit dieser verbundene Sensoren 120 und 121. Anstelle der in Fig. 1 an dem verstellbaren zylindrischen Gehäuse 7 sowie an dem Dämpfungszylinder 3 jeweils gezeichneten Positionsgeber 23 und 24 sind bei der Ausführung nach Fig. 2 jeweils radial außen an den vorgenannten Teilen ringförmige Positionsgeber 123 und 124 angebracht. Die Funktion der Wegmeßsysteme ist trotz der unterschiedlichen Zuordnung der Sensoren und Positionsgeber grundsätzlich die gleiche. Die Ausführung nach Fig. 2 mit radial außerhalb der Kolbenstange 104 liegenden langgestreckten Sensoren 120, 121 eignet sich besonders vorteilhaft für kurze Federbeine, bei denen die Sensoren aus konstruktiven Gründen, nämlich Platz- und Festigkeitsgründen, nicht ohne weiteres in der Kolbenstange 104 untergebracht werden können.

Grundsätzlich sind die in den Ausführungsbeispielen beschriebenen Wegmeßsysteme bei allen denkbaren Arten von ineinander teleskopierbaren, abstandsveränderbaren Verbindungselementen vorteilhaft einsetzbar.

## Patentansprüche

1. Feder-Dämpfer-Einrichtung zwischen einem Rad und dem Aufbau eines Kraftfahrzeuges, bei der
- der Dämpfer aus einem Dämpferzylinder (3) und einer mit diesem zusammenwirkenden Kolbenstange (4) besteht und unmittelbar zwischen dem Aufbau des Fahrzeuges und einem Führungselement des Rades angelenkt ist,
- die Feder (13) zwischen einem aufbauseitigen und einem radseitigen Widerlager (14, 15) gespannt ist, ,
- der Abstand zwischen dem aufbauseitigen Widerlager (14) und dem Aufbau durch eine hydraulische Verstelleinrichtung (5) veränderbar ist und bei der
- Meßeinrichtungen zur Bestimmung der Einbaulänge des Dämpfers (3, 4) sowie des Abstandes zwischen dem aufbauseitigen (14) für die Feder (13) und dem Aufbau vorgesehen sind,
**gekennzeichnet durch die Merkmale,**
- der Dämpfer (3, 4) und die Feder (13) verlaufen achsgleich,
- die hydraulische Verstelleinrichtung (5) besteht aus einem zylindrischen, die Kolbenstange (4) mit Ringabstand umgreifenden, an den axialen Enden gegenüber dieser Kolbenstange (4) radial gedichteten und geführten Gehäuse (7), wobei das Gehäuse (7) durch hydraulische Druckbeaufschlagung des Ringraumes gegenüber der Kolbenstange (4) relativ verschiebbar ist,
- die Meßeinrichtungen arbeiten berührungsfrei,
- die Meßeinrichtungen bestehen aus einem an dem Dämpfungszylinder (3) und einem an der Verstelleinrichtung (5) angebrachten Positionsgeber (24, 124 bzw. 23, 123), wobei jedem Positionsgeber ein fest mit der Kolbenstange verbundener Sensor (21, 121 beziehungsweise 20, 120) zugeordnet ist,
- die Sensoren (20, 120; 21, 121) befinden sich in einem gemeinsamen rohrförmigen Halter.

## Claims

1. Spring damper device between a wheel and the body of a motor vehicle, in which
- the damper comprises a damper cylinder (3) and a piston rod (4) co-operating therewith and is directly articulated between the body of the vehicle and a guide element of the wheel,
- the spring (13) is tensioned between a body-side and a wheel-side abutment (14, 15),
- the clearance between the body-side abutment (14) and the body can be varied by a hydraulic adjusting device (5) and in which
- measuring devices are provided to determine the installed length of the damper (3, 4) as well as the clearance between the body-side abutment (14) for the spring (13) and the body,
**characterised in that**
- the damper (3, 4) and the spring (13) extend coaxially,
- the hydraulic adjusting device (5) comprises a cylindrical housing (7) which engages with annular clearance around the piston rod (4) and is sealed and guided radially at the axial ends relative to this piston rod (4), the housing (7) being displaceable relative to the piston rod (4) by hydraulic pressure acting on the annular space,
- the measuring devices operate without contact,
- the measuring devices comprise a position transmitter (24, 124 or 23, 123), one of which is fitted to the damping cylinder (3) and one to the adjusting device (5), a sensor (21, 121 or 20, 120) fixedly connected to the piston rod being assigned to each position transmitter,
- the sensors (20, 120; 21, 121) are disposed in a common tubular holder.

## Revendications

1. Dispositif amortisseur à ressort entre une roue et la carrosserie d'un véhicule à moteur, dans le cas duquel
- l'amortisseur est constitué d'un cylindre d'amortisseur (3) et d'un piston (4) collaborant avec celui-ci et est directement articulé entre la carrosserie du véhicule et un élément de guidage de la roue,
- le ressort (13) est contraint entre une butée (14) située côté carrosserie et une butée (15) située côté roue,
- la distance entre la butée (14) située côté carrosserie et la carrosserie peut être modifiée par un dispositif de réglage hydraulique (5) et dans le cas duquel
- sont prévus des dispositifs de mesure pour déterminer la longueur de montage de l'amortisseur (3, 4) ainsi que la distance entre la butée (14), située du côté carrosserie, pour le ressort (13) et la carrosserie,
caractérisé par les caractéristiques suivantes
- l'amortisseur (3,4) et le ressort (13) sont orientés coaxialement,
- le dispositif de réglage hydraulique (5) est constitué d'un carter cylindrique (7) qui enserre la tige de piston (4) à une certaine distance annulaire, qui, aux extrémités axiales, est rendu étanche dans le sens radial par rapport à cette tige de piston (4) et y est guidé, le carter (7) pouvant coulisser relativement par rapport à la tige de piston (4) par mise sous pression hydraulique de l'espace annulaire
- les dispositifs de mesure travaillent sans contact,
- les dispositifs de mesure sont constitués d'un émetteur de position (24, 124) rapporté sur le cylindre d'amortisseur (3) et d'un émetteur de position (23, 123) rapporté sur le dispositif de réglage (5), un détecteur (21, 121 ou 20, 120), solidarisé avec la tige de piston, étant associé à chaque émetteur de position,
- les détecteurs (20, 120; 21, 121) se trouvent dans un support tubulaire commun.
